# EUROPEAN PATENT SPECIFICATION

(11) **EP 3 239 504 B1**
(45) Date of publication and mention of the grant of the patent: **27.02.2019**
(21) Application number: 15872727.1
(22) Date of filing: 10.12.2015
(51) Int. Cl.: F02D 45/00, F02D 41/02, F02D 43/00, F02P 5/152, F02D 41/14, F02D 41/30, F02D 35/02, F02D 37/02, F02D 41/24, F02D 11/10

(54) **ENGINE UNIT**
MOTOREINHEIT
UNITÉ DE MOTEUR

(30) Priority: 22.12.2014 JP 2014258917
(43) Date of publication of application: 01.11.2017
(73) Proprietor: Yamaha Hatsudoki Kabushiki Kaisha, Iwata-shi, Shizuoka 438-8501 (JP)
(72) Inventor: WAKIMURA, Makoto, Iwata-shi Shizuoka 438-8501 (JP)
(74) Representative: Stöckeler, Ferdinand
(86) International application number: PCT/JP2015/084604
(87) International publication number: WO 2016/104158

(56) References cited:
- EP-A1- 1 519 019
- EP-A2- 2 249 010
- JP-A- H08 270 479
- JP-A- 2002 081 328
- JP-A- 2004 092 640
- JP-A- 2005 090 309
- JP-A- 2009 203 973
- JP-A- 2009 203 973
- Anonymous: "The 2005 BMW R 1200 GS motorcycle.", , 16 November 2004 (2004-11-16), XP055427982, Retrieved from the Internet: URL:https://web.archive.org/web/2004111611 4445/https://www.bikez.com/motorcycles/bmw _r_1200_gs_2005.php [retrieved on 2017-11-23]

## Description

### Technical Field

The present invention relates to an engine unit.

### Background Art

An engine unit includes a fuel supplier configured to supply fuel into a combustion chamber. The fuel supplier is, for example, an injector configured to inject fuel. In general, to control the amount of fuel supplied by the fuel supplier ("fuel supply amount"), factors such as intake pressure, the opening degree of a throttle valve, engine rotation speed, oxygen concentration in the exhaust gas have been used (for example, see Patent Literature 1). In the following description, the opening degree of the throttle valve is referred to as a "throttle opening degree".

When the throttle opening degree is small, a basic fuel supply amount is determined based on the intake pressure and based on the engine rotation speed. The basic fuel supply amount is corrected based on the oxygen concentration in the exhaust gas, and the corrected amount is determined as the fuel supply amount. When the throttle opening degree is large, the basic fuel supply amount is determined based on the throttle opening degree and based on the engine rotation speed. The basic fuel supply amount is corrected based on the oxygen concentration in the exhaust gas, and the corrected amount is determined as the fuel supply amount. Control of the fuel supply amount based on the oxygen concentration in the exhaust gas is called "oxygen feedback control"

Furthermore JP2009203973 A describes a simplified fuel injection control with corresponding oxygen correction for certain engine speed versus throttle position ranges.

### Citation List

### Patent Literature

Patent Literature 1: U.S. Unexamined Patent Application Publication No. 2014/0288805
Patent Literature 2: JP2009203973 A

### Summary of Invention

### Technical Problem

The known fuel supply control, depending on the throttle opening degree, is switched between the following two modes: a first control mode based on the intake pressure and the engine rotation speed; and a second control mode based on the throttle opening degree and the engine rotation speed. Furthermore, the oxygen feedback control is performed in the known fuel supply control. For these reasons, the known fuel supply control is complicated. In recent years, further improvement in the exhaust gas purification performance and further improvement in engine power or fuel economy have been required for engine units. This tends to make the fuel supply control more complicated.

An object of the present invention is to provide an engine unit configured so that improvement in the exhaust gas purification performance and improvement in engine power or fuel economy are achieved by simple control.

### Solution to Problem and Advantageous Effects of Invention

According to an embodiment of the present teaching, an engine unit includes: an engine main body forming at least one combustion chamber; an intake passage member connecting an intake port provided through the combustion chamber with an atmosphere suction port through which air is taken in from the atmosphere, the air flowing inside the intake passage member from the atmosphere suction port to the intake port; an exhaust passage member connecting an exhaust port provided through the combustion chamber with an atmosphere discharge port through which exhaust gas is discharged to the atmosphere, the exhaust gas flowing inside the exhaust passage member from the exhaust port to the atmosphere discharge port; a fuel supplier configured to supply fuel into the combustion chamber; an ignition device configured to ignite the fuel in the combustion chamber; a close-to-combustion-chamber throttle valve provided in the intake passage member and positioned so that a path length of a first portion of the intake passage member is shorter than a path length of a second portion of the intake passage member, the first portion being from the close-to-combustion-chamber throttle valve to the intake port, the second portion being from the atmosphere suction port to the close-to-combustion-chamber throttle valve; a close-to-combustion-chamber throttle position sensor configured to detect an opening degree of the close-to-combustion-chamber throttle valve; a knocking sensor configured to detect knocking occurring in the engine main body; an engine rotation speed sensor configured to detect engine rotation speed; an oxygen sensor configured to detect oxygen concentration in the exhaust gas in the exhaust passage member; and a controller configured to control a fuel supply amount of the fuel supplier and to control an ignition timing of the ignition device. The controller includes: a basic fuel supply amount calculating unit configured to calculate a basic fuel supply amount based on a signal from the close-to-combustion-chamber throttle position sensor and based on a signal from the engine rotation speed sensor, wherever the signal from the close-to-combustion-chamber throttle position sensor is in an entire opening-degree range for the opening degree of the close-to-combustion-chamber throttle valve and wherever the signal from the engine rotation speed sensor is in an entire rotation-speed range for the engine rotation speed; a basic ignition timing calculating unit configured to calculate a basic ignition timing based on the signal from the close-to-combustion-chamber throttle position sensor and based on the signal from the engine rotation speed sensor, wherever the signal from the close-to-combustion-chamber throttle position sensor is in the entire opening-degree range for the opening degree of the close-to-combustion-chamber throttle valve and wherever the signal from the engine rotation speed sensor is in the entire rotation-speed range for the engine rotation speed; a final fuel supply amount calculating unit configured to calculate a final fuel supply amount from the basic fuel supply amount, the final fuel supply amount calculating unit including an oxygen sensor correcting unit configured to correct the basic fuel supply amount based on a signal from the oxygen sensor, and an oxygen sensor correction cancelling unit configured to cancel the correction by the oxygen sensor correcting unit based on the signal from the close-to-combustion-chamber throttle position sensor and based on the signal from the engine rotation speed sensor; a final ignition timing calculating unit configured to calculate the final ignition timing from the basic ignition timing, the final ignition timing calculating unit including a knocking sensor correcting unit configured to correct the basic ignition timing based on a signal from the knocking sensor and a knocking sensor correction cancelling unit configured to cancel the correction by the knocking sensor correcting unit based on the signal from the close-to-combustion-chamber throttle position sensor and based on the signal from the engine rotation speed sensor; and an actuation instructing unit configured to actuate the fuel supplier based on the final fuel supply amount and configured to actuate the ignition device based on the final ignition timing.

The engine unit includes: the engine main body; the intake passage member; the exhaust passage member; the fuel supplier; the ignition device; the close-to-combustion-chamber throttle valve; the close-to-combustion-chamber throttle position sensor; the knocking sensor; the engine rotation speed sensor; the oxygen sensor; and the controller. The engine main body forms the at least one combustion chamber. The intake passage member connects the intake port provided through the combustion chamber with the atmosphere suction port through which air is taken in from the atmosphere. The air flows in the intake passage member from the atmosphere suction port to the intake port. The exhaust passage member connects the exhaust port provided through the combustion chamber with the atmosphere discharge port through which exhaust gas is discharged to the atmosphere. The exhaust gas flows in the exhaust passage member from the exhaust port to the atmosphere discharge port. The fuel supplier is configured to supply fuel into the combustion chamber. The ignition device is configured to ignite the fuel in the combustion chamber. The close-to-combustion-chamber throttle valve is provided in the intake passage member. The close-to-combustion-chamber throttle position sensor is configured to detect the opening degree of the close-to-combustion-chamber throttle valve. The knocking sensor is configured to detect knocking occurring in the engine main body. The engine rotation speed sensor is configured to detect the engine rotation speed. The oxygen sensor is configured to detect the oxygen concentration in the exhaust gas in the exhaust passage member. The controller is configured to control the fuel supply amount of the fuel supplier and to control the ignition timing of the ignition device. The controller includes: the basic fuel supply amount calculating unit; the basic ignition timing calculating unit; the final fuel supply amount calculating unit; the final ignition timing calculating unit; and the actuation instructing unit.

As the opening degree of the close-to-combustion-chamber throttle valve changes, the amount of air taken into the combustion chamber changes. The path length from the close-to-combustion-chamber throttle valve to the intake port is shorter than the path length from the atmosphere suction port to the close-to-combustion-chamber throttle valve. That is, the close-to-combustion-chamber throttle valve is provided close to the combustion chamber. Due to this, there is less delay in the change of the amount of air taken into the combustion chamber, in relation to the change in the opening degree of the close-to-combustion-chamber throttle valve.

The basic fuel supply amount calculating unit is configured to calculate the basic fuel supply amount based on a signal from the close-to-combustion-chamber throttle position sensor and based on a signal from the engine rotation speed sensor. The basic fuel supply amount calculating unit is able to calculate the basic fuel supply amount throughout the entire opening-degree range for the opening degree of the close-to-combustion-chamber throttle valve and throughout the entire rotation-speed range for the engine rotation speed. The basic ignition timing calculating unit is configured to calculate the basic ignition timing based on the signal from the close-to-combustion-chamber throttle position sensor and based on the signal from the engine rotation speed sensor. The basic ignition timing calculating unit is able to calculate the basic ignition timing throughout the entire opening-degree range for the opening degree of the close-to-combustion-chamber throttle valve and throughout the entire rotation-speed range for the engine rotation speed.

Thus, the basic fuel supply amount calculating unit calculates the basic fuel supply amount based on the opening degree of the close-to-combustion-chamber throttle valve. The basic ignition timing calculating unit also calculates the basic ignition timing based on the opening degree of the close-to-combustion-chamber throttle valve. Because of these, there is less delay in the change of the basic fuel supply amount and in the change of the basic ignition timing, in relation to the change in the opening degree of the close-to-combustion-chamber throttle valve. As described above, there is less delay in the change of the amount of air taken into the combustion chamber, in relation to the change in the opening degree of the close-to-combustion-chamber throttle valve. Due to this, when the opening degree of the close-to-combustion-chamber throttle valve changes, there is a small time lag between: the change of each of the basic fuel supply amount and the basic ignition timing in response to the change in the valve opening degree; and the change of the amount of air taken into the combustion chamber in response to the change in the valve opening degree.

The final fuel supply amount calculating unit is configured to calculate the final fuel supply amount from the basic fuel supply amount. The final fuel supply amount calculating unit includes the oxygen sensor correcting unit and the oxygen sensor correction cancelling unit. The oxygen sensor correcting unit is configured to correct the basic fuel supply amount based on a signal from the oxygen sensor. The oxygen sensor correction cancelling unit is configured to cancel the correction by the oxygen sensor correcting unit based on the signal from the close-to-combustion-chamber throttle position sensor and based on the signal from the engine rotation speed sensor. The final ignition timing calculating unit is configured to calculate the final ignition timing from the basic ignition timing. The final ignition timing calculating unit includes the knocking sensor correcting unit and the knocking sensor correction cancelling unit. The knocking sensor correcting unit is configured to correct the basic ignition timing based on a signal from the knocking sensor. The knocking sensor correction cancelling unit is configured to cancel the correction by the knocking sensor correcting unit based on the signal from the close-to-combustion-chamber throttle position sensor and based on the signal from the engine rotation speed sensor. The actuation instructing unit is configured to actuate the fuel supplier based on the final fuel supply amount. Furthermore, the actuation instructing unit is configured to actuate the ignition device based on the final ignition timing.

Thus, the final fuel supply amount calculating unit is configured to determine whether to cancel the correction to the basic fuel supply amount based on the opening degree of the close-to-combustion-chamber throttle valve, and to determine the final fuel supply amount. Meanwhile, the final ignition timing calculating unit is configured to determine whether to cancel the correction to the basic ignition timing based on the opening degree of the close-to-combustion-chamber throttle valve, and to determine the final ignition timing. Because of these, there is less delay in correction to the basic fuel supply amount and in correction to the basic ignition timing, in relation to the change in the opening degree of the close-to-combustion-chamber throttle valve. As described above, there is less delay in the change of the amount of air taken into the combustion chamber, in relation to the change in the opening degree of the close-to-combustion-chamber throttle valve. Due to this, when the opening degree of the close-to-combustion-chamber throttle valve changes, there is a small time lag between: the change of a correction value for each of the basic fuel supply amount and the basic ignition timing in response to the change in the valve opening degree; and the change of the amount of air taken into the combustion chamber in response to the change in the valve opening degree.

As described above, when the opening degree of the close-to-combustion-chamber throttle valve changes, there is a small time lag between: the change of each of the basic fuel supply amount and the basic ignition timing in response to the change in the valve opening degree; and the change of the amount of air taken into the combustion chamber in response to the change in the valve opening degree. Furthermore, when the opening degree of the close-to-combustion-chamber throttle valve changes, there is a small time lag between: the change of the correction value for each of the basic fuel supply amount and the basic ignition timing in response to the change in the valve opening degree; and the change of the amount of air taken into the combustion chamber in response to the change in the valve opening degree. This enables improvement in precision in the control of the fuel supply amount and the ignition timing. As a result, improvement in the exhaust gas purification performance and improvement in engine power or fuel economy are achievable.

The fuel supply amount and the ignition timing are controlled based on readings by the close-to-combustion-chamber throttle position sensor and by the engine rotation speed sensor. In addition, the control of the fuel supply amount and the control of the ignition timing each covers the entire opening-degree range for the opening degree of the close-to-combustion-chamber throttle valve and the entire rotation-speed range for the engine rotation speed. As a result, the improvement in the exhaust gas purification performance and the improvement in engine power or fuel economy are achievable by simple control.

It is preferable that the engine unit of the present teaching does not include: an intake pressure sensor provided for the intake passage member and configured to detect internal pressure in the intake passage member; and an intake temperature sensor provided for the intake passage member and configured to detect temperature in the intake passage member.

In the above arrangement, the engine unit does not include the intake pressure sensor configured to detect the internal pressure in the intake passage member. Furthermore, the engine unit does not include the intake temperature sensor configured to detect the temperature in the intake passage member. Because of these, intake pressure and intake temperature are not used to control the fuel supply amount and the ignition timing. This makes the control of the fuel supply amount and the control of the ignition timing simpler.

### Brief Description of the Drawings

[FIG. 1] FIG. 1 is a left side view of a motorcycle in which an engine unit of an embodiment is used.
[FIG. 2] FIG. 2 is a schematic diagram of the engine unit.
[FIG. 3] FIG. 3 is a control block diagram of the engine unit.
[FIG. 4] FIG. 4 is a diagram specifically illustrating a part of the control block of the engine unit.
[FIG. 5] FIG. 5 is a map for an intake air amount, associated with throttle opening degree and engine rotation speed.
[FIG. 6] FIG. 6 is a graph illustrating an example of the relationship between the throttle opening degree, the engine rotation speed, and a basic fuel supply amount.
[FIG. 7] FIG. 7 is a diagram illustrating the relationship between the throttle opening degree, the engine rotation speed, and an oxygen feedback control area.
[FIG. 8] FIG. 8 is a diagram illustrating the relationship between the throttle opening degree, the engine rotation speed, and an oxygen feedback learning area.
[FIG. 9] FIG. 9 is a graph illustrating an example of the relationship between the throttle opening degree, the engine rotation speed, and a basic ignition timing.
[FIG. 10] FIG. 10 is a diagram illustrating the relationship between the throttle opening degree, the engine rotation speed, and a knocking control area.

### Description of Embodiments

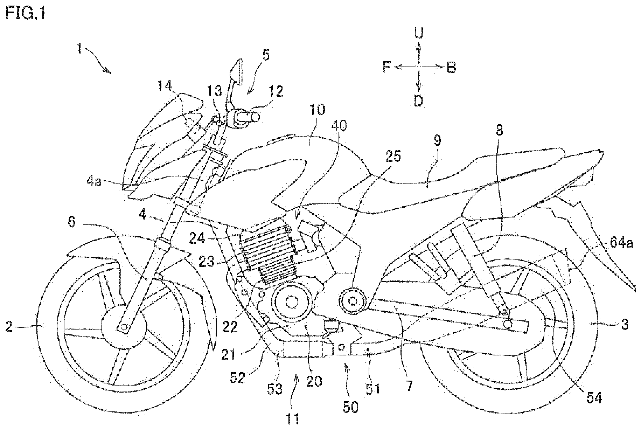

The following describes an embodiment of the present teaching. This embodiment deals with an example of a motorcycle in which the engine unit of the present teaching is used. In the following description, a front-back direction refers to a vehicle's front-back direction as seen from a rider seated on a seat 9 of a motorcycle 1. The seat 9 is described later. A left-right direction refers to a vehicle's left-right direction as seen from the rider seated on the seat 9. The vehicle's left-right direction is the same as a vehicle's width direction. Arrows F and B in FIG. 1 respectively indicate a forward direction and a backward direction. Arrows U and D respectively indicate an upward direction and a downward direction.

### [Overall Structure of Motorcycle]

As shown in FIG. 1, the motorcycle 1 of this embodiment includes a front wheel 2, a rear wheel 3, and a vehicle body frame 4. The vehicle body frame 4 has, at its front portion, a head pipe 4a. A steering shaft (not illustrated) is inserted into the head pipe 4a in a rotatable manner. An upper end portion of the steering shaft is coupled to a handle unit 5. Upper end portions of a pair of front forks 6 are secured to the handle unit 5. Lower end portions of the front forks 6 support the front wheel 2.

The handle unit 5 is provided with a right grip (not illustrated) and a left grip 12. The right grip is a throttle grip configured to adjust engine power. As the rider rotates the throttle grip towards the rider with the hand gripping the throttle grip, the engine power increases. Specifically, the throttle opening degree increases. As the rider rotates the throttle grip in the opposite direction, the engine power decreases. Specifically, the throttle opening degree decreases. Moreover, a brake lever 13 is provided in front of the left grip 12. In addition, a display device 14 is provided in front of the handle unit 5. Although not illustrated, the display device 14 is configured to display thereon vehicle speed, engine rotation speed, and the like. Furthermore, the display device 14 is provided with indicators (indicator lamps).

A pair of swingarms 7 are supported by the vehicle body frame 4 in a swingable manner. Rear end portions of the swingarms 7 support the rear wheel 3. Rear suspensions 8 are respectively attached to the swingarms 7. One end portion of each suspension 8 is connected to a portion of the corresponding swingarm 7, the portion being rearward of the swingarm pivot. The other end portion of each rear suspension 8 is attached to the vehicle body frame 4.

The seat 9 and a fuel tank 10 are supported by an upper portion of the vehicle body frame 4. The fuel tank 10 is in front of the seat 9. Furthermore, an engine unit 11 is mounted on the vehicle body frame 4. The engine unit 11 is provided below the fuel tank 10. Furthermore, a battery (not illustrated) is mounted on the vehicle body frame 4. The battery is configured to supply electrical power to electronic equipment such as various types of sensors.

### [Structure of Engine Unit]

The engine unit 11 is a natural air-cooled engine. The engine unit 11 is a four-stroke single-cylinder engine. The four-stroke engine is structured so that an engine cycle constituted by the intake stroke, the compression stroke, the combustion (expansion) stroke, and the exhaust stroke is repeated. The engine unit 11 includes: an engine main body 20; an intake unit 40; and an exhaust unit 50.

The engine main body 20 includes a crankcase 21, a cylinder body 22, a cylinder head 23, and a head cover 24. The cylinder body 22 is attached to an upper end portion of the crankcase 21. The cylinder head 23 is attached to an upper end portion of the cylinder body 22. The head cover 24 is attached to an upper end portion of the cylinder head 23.

A fin portion 25 is provided on at least a part of a surface of the engine main body 20. The fin portion 25 ranges over the cylinder body 22 and the cylinder head 23. The fin portion 25 consists of a plurality of fins. Each of the fins projects from the surface of the engine main body 20. The fin portion 25 is provided throughout the substantially entire circumferences of the cylinder body 22 and the cylinder head 23. The fin portion 25 is configured to dissipate heat generated in the engine main body 20.

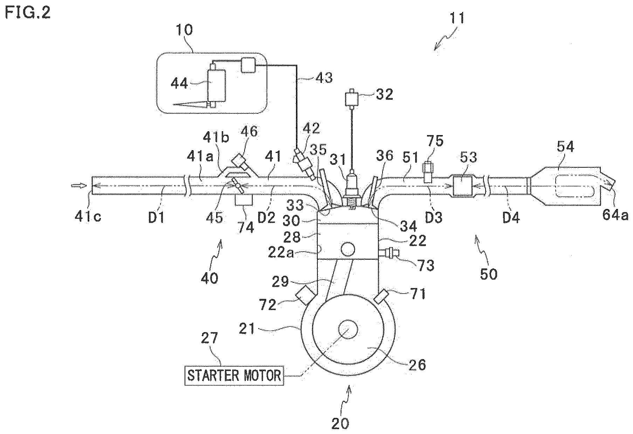

FIG. 2 is a schematic diagram illustrating the engine unit 11. As shown in FIG. 2, the crankcase 21 accommodates therein a crankshaft 26, a starter motor 27, a gearbox (not illustrated), a generator (not illustrated), and the like. The gearbox is configured to change the ratio between the rotation speed of the crankshaft 26 and the rotation speed of the rear wheel 3. Rotation of the crankshaft 26 is transmitted to the rear wheel 3 via the gearbox. The starter motor 27 rotates the crankshaft 26 at the time of engine start-up. The starter motor 27 is powered by the battery (not illustrated). The generator is configured to generate electrical power with the use of the rotation of the crankshaft 26. The battery is charged with electricity generated by the generator. Instead of the starter motor 27 and the generator, an Integrated Starter Generator (ISG) may be provided. The ISG is a device in which the starter motor and the generator are integrated.

An engine rotation speed sensor 71 and a knocking sensor 72 are provided in the crankcase 21. The engine rotation speed sensor 71 is configured to detect the rotation speed of the crankshaft 26, i.e., engine rotation speed. The engine rotation speed is the number of rotations of the crankshaft 26 per unit time. The knocking sensor 72 is configured to detect knocking occurring in the engine main body 20. Knocking is a phenomenon in which metallic pinging sounds or pinging vibrations occur due to abnormal combustion in a later-described combustion chamber 30. Normally, combustion of an air-fuel mixture is started by ignition due to spark discharge, and the flame of the burning air-fuel mixture propagates in the combustion chamber. Note that, in this description, an air-fuel mixture is the mixture of air and fuel. Knocking is caused by spontaneous ignition of unburned air-fuel mixture, to which the flame propagation does not extend, in the combustion chamber 30. The knocking sensor 72 may have any configuration as long as it is able to detect knocking.

The cylinder body 22 has a cylinder hole 22a. A piston 28 is provided in the cylinder hole 22a in a slidable manner. The piston 28 is coupled to the crankshaft 26 via a connecting rod 29. An engine temperature sensor 73 is provided to the engine main body 20. The engine temperature sensor 73 is configured to detect the temperature of the engine main body 20. Specifically, the engine temperature sensor 73 is configured to detect the temperature of the cylinder body 22.

The combustion chamber 30 (see FIG. 2) is formed by: an underside of the cylinder head 23; the cylinder hole 22a; and the piston 28. A leading end portion of a spark plug 31 is in the combustion chamber 30. The spark plug 31 produces, from its leading end portion, an electrical spark. The spark discharge ignites the air-fuel mixture in the combustion chamber 30. The spark plug 31 is wired to an ignition coil 32. The ignition coil 32 stores electrical power to enable the spark discharge from the spark plug 31. The combination of the spark plug 31 and the ignition coil 32 is equivalent to an ignition device in the present teaching.

An intake port 33 and an exhaust port 34 are provided through the surface of the cylinder head 23, the surface forming the combustion chamber 30. That is, the intake port 33 and the exhaust port 34 are provided through the combustion chamber 30. The intake port 33 is opened/closed by an intake valve 35. The exhaust port 34 is opened/closed by an exhaust valve 36. The intake valve 35 and the exhaust valve 36 are actuated by a valve moving device (not illustrated) housed in the cylinder head 23. The valve moving device operates in association with the crankshaft 26.

The engine unit 11 includes an intake passage member 41 connecting the intake port 33 with an atmosphere suction port 41c exposed to the atmosphere. Herein, the "passage member" means a wall structure or the like that is around a path and forms therein the path. The path means a space through which an object passes. Air is taken in from the atmosphere through the atmosphere suction port 41c. The air, taken in through the atmosphere suction port 41c, flows inside the intake passage member 41 towards the intake port 33. A part of the intake passage member 41 is included in the engine main body 20, and the remaining part of the intake passage member 41 is included in the intake unit 40. The intake unit 40 includes an intake pipe connected to the engine main body 20. The intake unit 40 further includes an injector 42, a throttle valve 45, and a bypass valve 46. In the following description, upstream and downstream in the direction of airflow in the intake passage member 41 may be simply referred to as upstream and downstream, respectively.

The engine unit 11 includes an exhaust passage member 51 connecting the exhaust port 34 with an atmosphere discharge port 64a exposed to the atmosphere. Combustion gas generated in the combustion chamber 30 is discharged to the exhaust passage member 51 via the exhaust port 34. The combustion gas discharged from the combustion chamber 30 is referred to as exhaust gas. Exhaust gas flows inside the exhaust passage member 51 towards the atmosphere discharge port 64a. The exhaust gas is discharged to the atmosphere through the atmosphere discharge port 64a. A part of the exhaust passage member 51 is included in the engine main body 20, and the remaining part of the exhaust passage member 51 is included in the exhaust unit 50. The exhaust unit 50 includes an exhaust pipe 52 (see FIG. 1) connected to the engine main body 20. The exhaust unit 50 further includes a catalyst 53 and a muffler 54. The muffler 54 is a device configured to reduce the amount of noise made by the exhaust gas. In the following description, upstream and downstream in the direction of flow of the exhaust gas in the exhaust passage member 51 may be simply referred to as upstream and downstream, respectively.

The injector 42 is provided to the intake passage member 41. The injector 42 is configured to inject fuel to the air taken in through the atmosphere suction port 41c. To be more specific, the injector 42 is configured to inject fuel to the air in the intake passage member 41. The injector 42 is equivalent to a fuel supplier in the present teaching. The injector 42 is connected to a fuel hose 43, which is connected to the fuel tank 10. A fuel pump 44 is provided in the fuel tank 10. The fuel pump 44 is configured to feed fuel from the fuel tank 10 to the fuel hose 43 under pressure.

The intake passage member 41 includes a main intake passage member 41a and a bypass intake passage member 41b. The throttle valve 45 is provided in the main intake passage member 41a. The throttle valve 45 is provided upstream of the injector 42. The bypass intake passage member 41b is connected to the main intake passage member 41a so as to bypass the throttle valve 45. That is, the bypass intake passage member 41b establishes communication between an upstream portion and a downstream portion of the main intake passage member 41a, the upstream and downstream portions being respectively upstream and downstream of the throttle valve 45. The throttle valve 45 is equivalent to a "close-to-combustion-chamber throttle valve" in the present teaching.

The path formed inside the intake passage member 41 is referred to as an intake path. A path length of a freely-selected portion of the intake passage member 41 means the length of the path formed in the freely-selected portion. As shown in FIG. 2, a path length of a first portion of the intake passage member 41, the first portion being from the atmosphere suction port 41c to the throttle valve 45, is called a path length D1. A path length of a second portion of the intake passage member 41, the second portion being from the throttle valve 45 to the intake port 33, is called a path length D2. The path length D2 is shorter than the path length D1. That is, the throttle valve 45 is close to the combustion chamber 30. The volume of the first portion of the intake passage member 41, the first portion being from the atmosphere suction port 41c to the throttle valve 45, is called a volume V1. The volume of the second portion of the intake passage member 41, the second portion being from the throttle valve 45 to the intake port 33, is called a volume V2. The volume V1 is larger than the volume V2.

The throttle valve 45 is connected to the throttle grip (not illustrated) by a throttle wire. The opening degree of the throttle valve 45 is changed as the rider rotates the throttle grip. The engine unit 11 includes a throttle position sensor 74 configured to detect the opening degree of the throttle valve 45. Hereinafter, the opening degree of the throttle valve 45 is referred to as a "throttle opening degree". The throttle position sensor 74 is configured to detect the position of the throttle valve 45, and to output a signal indicating the detected position, i.e., the throttle opening degree. The throttle position sensor 74 is equivalent to a close-to-combustion-chamber throttle position sensor in the present teaching.

A bypass valve 46 is provided to the bypass intake passage member 41b. The bypass valve 46 is provided to adjust the flow rate of air flowing through the bypass intake passage member 41b. The bypass valve 46 is manually operated. The bypass valve 46 is formed by an adjust screw, for example. A valve mechanism configured so that its opening degree is controlled by a later-described ECU 80 is not provided to the bypass intake passage member 41b.

An intake pressure sensor configured to detect internal pressure in the intake passage member 41 is not provided in the intake passage member 41. The internal pressure in the intake passage member 41 is called intake pressure. An intake temperature sensor configured to detect temperature in the intake passage member 41 is not provided in the intake passage member 41. The temperature of air in the intake passage member 41 is called intake temperature.

The catalyst 53 is provided in the exhaust passage member 51. The catalyst 53 is provided in the exhaust pipe 52 of the exhaust unit 50 (see FIG. 1). The path formed inside the exhaust passage member 51 is referred to as an exhaust path. A path length of a freely-selected portion of the exhaust passage member 51 means the length of the path formed in the freely-selected portion. As shown in FIG. 2, a path length of a first portion of the exhaust passage member 51, the first portion being from the exhaust port 34 to an upstream end of the catalyst 53, is called a path length D3. A path length of a second portion of the exhaust passage member 51, the second portion being from a downstream end of the catalyst 53 to the atmosphere discharge port 64a, is called a path length D4. The path length D3 is shorter than the path length D4. That is, the catalyst 53 is close to the combustion chamber 30. The volume of the first portion of the exhaust passage member 51, the first portion being from the exhaust port 34 to the upstream end of the catalyst 53, is called a volume V3. The volume of the second portion of the exhaust passage member 51, the second portion being from the downstream end of the catalyst 53 to the atmosphere discharge port 64a, is called a volume V4. The volume V3 is smaller than the volume V4. As shown in FIG. 1, the catalyst 53 is disposed below the engine main body 20.

The catalyst 53 is a three-way catalyst. The three-way catalyst is configured to convert three substances contained in the exhaust gas: hydrocarbon (HC), carbon monoxide (CO), and nitrogen oxide (NOx), by oxidation or reduction. The catalyst 53 does not have to be the three-way catalyst, and may be configured to convert one or two of the three substances of hydrocarbon, carbon monoxide, and nitrogen oxide. The catalyst 53 does not have to be an oxidation-reduction catalyst. The catalyst 53 may be an oxidation catalyst or a reduction catalyst, which is configured to convert harmful substances by either oxidation or reduction. The catalyst 53 includes a base material to which one or more noble metals having a function of purifying exhaust gas are attached. The catalyst 53 in this embodiment is a catalyst including a metal base material. Alternatively, the catalyst 53 may be a catalyst including a ceramic base material.

An oxygen sensor 75 is provided to the exhaust passage member 51. The oxygen sensor 75 is provided upstream of the catalyst 53. The oxygen sensor 75 is configured to detect oxygen concentration in the exhaust gas. The oxygen sensor 75 is configured to output a voltage signal indicating the level of the oxygen concentration in the exhaust gas. Specifically, the oxygen sensor 75 is configured to output a high voltage level signal when the air-fuel ratio of the air-fuel mixture is rich, and to output a low voltage level signal when the air-fuel ratio of the air-fuel mixture is lean. "Rich" means that excess fuel is contained in the mixture with respect to a target air-fuel ratio. "Lean" means that excess air is contained in the mixture with respect to the target air-fuel ratio. That is, the reading by the oxygen sensor 75 shows whether the air-fuel ratio of the air-fuel mixture is rich or lean. The oxygen sensor 75 includes a sensor element formed by a solid electrolyte mainly containing zirconia. The sensor element is activated when heated to a high temperature, which enables the oxygen sensor 75 to detect the oxygen concentration. The oxygen sensor 75 may be a linear air/fuel ratio sensor ("linear A/F sensor") configured to output a linear detection signal proportionally to the oxygen concentration in the exhaust gas. The linear A/F sensor is configured to continuously detect the change of the oxygen concentration in the exhaust gas.

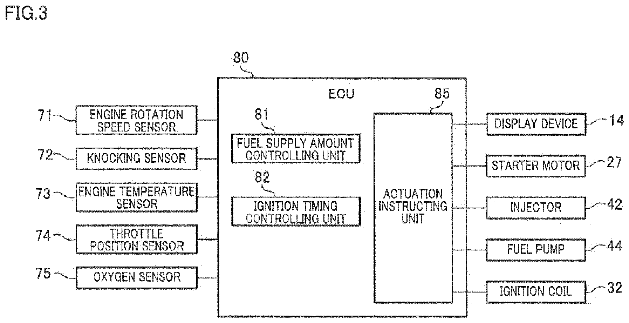

As shown in FIG. 3, the engine unit 11 includes an ECU (Electronic Control Unit) 80 configured to control the operation of the engine unit 11. The ECU 80 is equivalent to a controller in the present teaching. The ECU 80 is connected to various types of sensors such as the engine rotation speed sensor 71, the knocking sensor 72, the engine temperature sensor 73, the throttle position sensor 74, and the oxygen sensor 75. The ECU 80 is also connected to the ignition coil 32, the injector 42, the fuel pump 44, the starter motor 27, the display device 14, and the like.

The ECU 80 comprises a CPU (central processing unit), a ROM (read-only memory), a RAM (random-access memory), and the like. The CPU executes information processing based on programs and various types of data stored in the ROM and the RAM. In this way, the ECU 80 implements respective functions of function processors. As shown in FIG. 3, the ECU 80 includes the function processors such as a fuel supply amount controlling unit 81 and an ignition timing controlling unit 82. The ECU 80 further includes an actuation instructing unit 85. The actuation instructing unit 85 is configured to transmit an actuation instruction signal to the ignition coil 32, the injector 42, the fuel pump 44, the starter motor 27, the generator, the display device 14, or the like, based on the result of the information processing by the function processors.

The fuel supply amount controlling unit 81 is configured to determine the fuel supply amount of the injector 42. The fuel supply amount is the fuel injection amount in this embodiment. To be more specific, the fuel supply amount controlling unit 81 controls the length of time during which the injector 42 injects fuel. To enhance the combustion efficiency and the exhaust gas purification efficiency by the catalyst 53, it is preferable that the air-fuel ratio of the air-fuel mixture is equal to the stoichiometric air-fuel ratio. The fuel supply amount controlling unit 81 increases or decreases the fuel supply amount as needed. For example, before the completion of warming up of the engine unit 11, the fuel supply amount is more than a usual amount. Also, at the time of acceleration, the fuel supply amount is more than the usual amount to increase the engine power of the engine unit 11. Meanwhile, at the time of deceleration, the fuel supply amount is reduced.

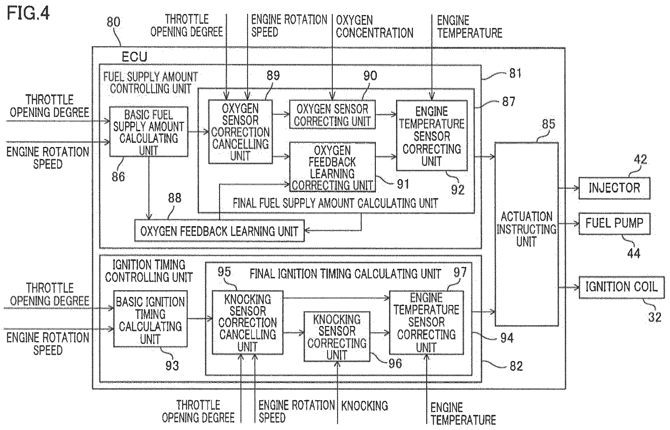

As shown in FIG. 4, the fuel supply amount controlling unit 81 includes: a basic fuel supply amount calculating unit 86; a final fuel supply amount calculating unit 87; and an oxygen feedback learning unit 88. The basic fuel supply amount calculating unit 86 is configured to calculate a basic fuel supply amount. The final fuel supply amount calculating unit 87 is configured to correct the basic fuel supply amount calculated by the basic fuel supply amount calculating unit 86, to calculate a final fuel supply amount.

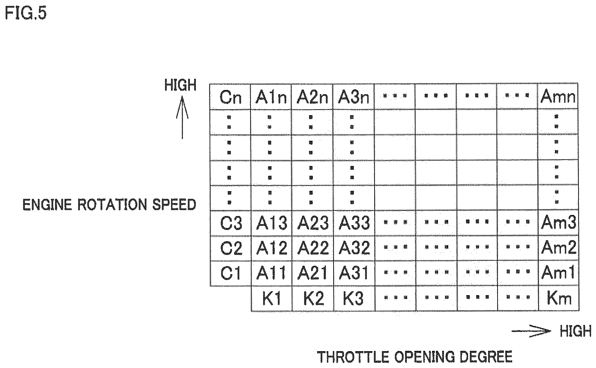

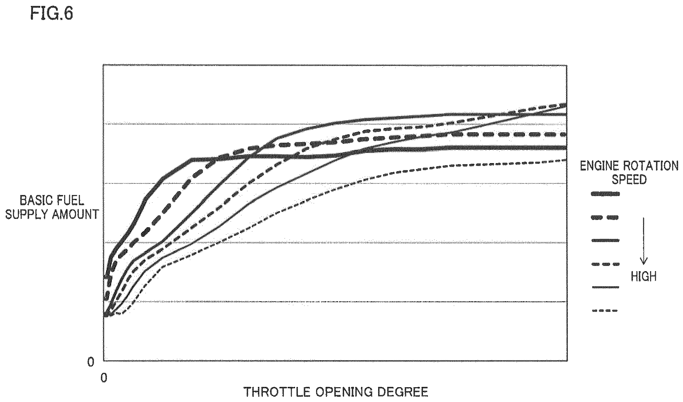

The basic fuel supply amount calculating unit 86 is configured to calculate the basic fuel supply amount based on a signal from the throttle position sensor 74 and based on a signal from the engine rotation speed sensor 71. The basic fuel supply amount calculating unit 86 is able to calculate the basic fuel supply amount throughout the entire opening-degree range for the opening degree of the throttle valve 45 and throughout the entire rotation-speed range for the engine rotation speed. The basic fuel supply amount calculating unit 86 is configured to calculate the basic fuel supply amount based on the above-mentioned two signals, wherever the signals are in the respective entire ranges mentioned above. To be more specific, a map illustrated in FIG. 5 is used to calculate the basic fuel supply amount. The map shown in FIG. 5 contains values for an intake air amount (A11, A12, ..., A1n, A21, A22, ..., Am1, Am2, ..., Amn), associated with values for the throttle opening degree (K1, K2, ..., Km) and with values for the engine rotation speed (C1, C2, ..., Cn). The intake air amount is a mass flow rate of intake air. In this map, the values for the intake air amount are set for the entire opening-degree range for the throttle opening degree and for the entire rotation-speed range for the engine rotation speed. This map and later-described other maps are stored in the ROM. First of all, the basic fuel supply amount calculating unit 86 obtains the intake air amount with reference to the map of FIG. 5. Then, the basic fuel supply amount calculating unit 86 determines a basic fuel supply amount that achieves a target air-fuel ratio in combination with the intake air amount obtained from the map. FIG. 6 is a graph illustrating an example of the relationship between the throttle opening degree, the engine rotation speed, and the basic fuel supply amount.

The final fuel supply amount calculating unit 87 includes: an oxygen sensor correction cancelling unit 89; an oxygen sensor correcting unit 90; an oxygen feedback learning correcting unit 91; and an engine temperature sensor correcting unit 92. The oxygen sensor correcting unit 90 is configured to correct the basic fuel supply amount based on a signal from the oxygen sensor 75. Control of the fuel supply amount based on a signal from the oxygen sensor 75 is called "oxygen feedback control".

The oxygen sensor correction cancelling unit 89 is configured to determine whether to temporarily cancel the correction to the basic fuel supply amount made by the oxygen sensor correcting unit 90. That is, the oxygen sensor correction cancelling unit 89 is configured to determine whether to temporarily cancel the oxygen feedback control. The above determination is made based on the signal from the throttle position sensor 74 and based on the signal from the engine rotation speed sensor 71.

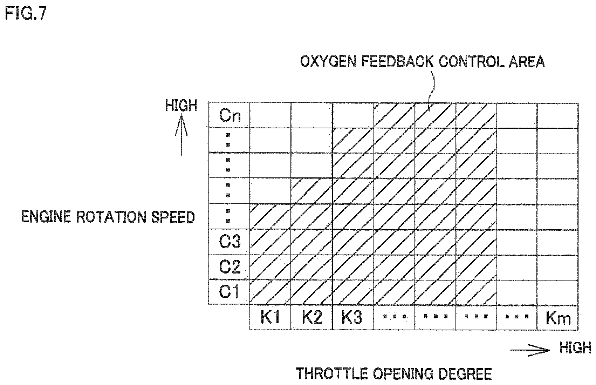

To be more specific, a map shown in FIG. 7 is used for the above determination. The map of FIG. 7 shows an oxygen feedback control area associated with the values for the throttle opening degree and with the values for the engine rotation speed. The oxygen feedback control area is shown as hatching in FIG. 7. As shown in FIG. 7, the oxygen feedback control area does not include an area corresponding to particularly large values for the throttle opening degree. Furthermore, the oxygen feedback control area does not include an area corresponding to particularly low values for the throttle opening degree and to large values for the engine rotation speed.

The oxygen sensor correction cancelling unit 89 determines whether a point indicated by the signal from the throttle position sensor 74 and the signal from the engine rotation speed sensor 71 is included in the oxygen feedback control area. When the point indicated by the two signals is not included in the oxygen feedback control area, the oxygen sensor correction cancelling unit 89 determines to cancel the correction. Meanwhile, when the point indicated by the two signals is included in the oxygen feedback control area, the oxygen sensor correction cancelling unit 89 determines not to cancel the correction.

When determining to cancel the correction, the oxygen sensor correction cancelling unit 89 cancels the correction by the oxygen sensor correcting unit 90. To cancel the correction by the oxygen sensor correcting unit 90 is to, specifically, prevent the oxygen sensor correcting unit 90 from performing arithmetic processing. Note that the cancellation of the correction by the oxygen sensor correcting unit 90 may be performed in an alternative way. That is, the oxygen sensor correcting unit 90 may perform arithmetic processing using a correction value which is not based on the signal from the oxygen sensor 75 so that the result of the arithmetic processing is equal to the value before the correction. For example, if the oxygen sensor correcting unit 90 is programmed to add a correction value to the basic fuel supply amount in the arithmetic processing, zero may be assigned to the correction value to cancel the correction.

When the oxygen sensor correction cancelling unit 89 determines not to cancel the correction, the oxygen sensor correcting unit 90 corrects the basic fuel supply amount. As described above, the oxygen sensor correcting unit 90 corrects the basic fuel supply amount based on the signal from the oxygen sensor 75. To be more specific, when the signal from the oxygen sensor 75 indicates that the mixture is lean, the basic fuel supply amount is corrected so that the amount of fuel to be supplied next increases. Meanwhile, when the signal from the oxygen sensor 75 indicates that the mixture is rich, the basic fuel supply amount is corrected so that the amount of fuel to be supplied next decreases.

When the oxygen sensor correction cancelling unit 89 cancels the correction by the oxygen sensor correcting unit 90, the oxygen feedback learning correcting unit 91 corrects the basic fuel supply amount. The oxygen feedback learning correcting unit 91 corrects the basic fuel supply amount based on an oxygen feedback environment learning correction value and based on an oxygen feedback bypass valve learning correction value, which is described later.

The result obtained by correcting the basic fuel supply amount by the oxygen sensor correcting unit 90 or the oxygen feedback learning correcting unit 91 is referred to as a "corrected fuel supply amount". The engine temperature sensor correcting unit 92 corrects the corrected fuel supply amount or the basic fuel supply amount, based on a signal from the engine temperature sensor 73. The final fuel supply amount calculating unit 87 adopts the value obtained through correction by the engine temperature sensor correcting unit 92 as a final fuel supply amount. The actuation instructing unit 85 actuates the fuel pump 44 and the injector 42 based on the final fuel supply amount calculated by the final fuel supply amount calculating unit 87.

The engine unit 11 of this embodiment does not include an intake pressure sensor. Because of this, a change in atmospheric pressure caused by a change in altitude, for example, is not directly reported to the ECU 80. However, the change in atmospheric pressure causes a change in the intake air amount. Furthermore, the opening degree of the bypass valve 46 provided to the bypass intake passage member 41b is not directly reported to the ECU 80. However, under conditions where the throttle opening degree is small, a large influence is made on the intake air amount by the change in the opening degree of the bypass valve 46. Note that, under conditions where the throttle opening degree is large, a smaller influence is made on the intake air amount by the change in the opening degree of the bypass valve 46.

When the oxygen feedback control is performed, the fuel supply amount is properly controlled to address the change in the intake air amount due to the change in atmospheric pressure or due to the change in the opening degree of the bypass valve 46. However, in order to properly control the fuel supply amount without the oxygen feedback control, a correction has to be made to address the change in atmospheric pressure and the change in the opening degree of the bypass valve 46. For this reason, the oxygen feedback learning unit 88 is provided in this embodiment, to address the change in atmospheric pressure and the change in the opening degree of the bypass valve 46 in the control of the fuel supply amount. The oxygen feedback learning unit 88 is configured to perform oxygen feedback learning. The oxygen feedback learning includes oxygen feedback environment learning in which change in atmospheric pressure is learned. The oxygen feedback learning further includes oxygen feedback bypass valve learning in which change in the opening degree of the bypass valve 46 is learned. That is, the oxygen feedback learning includes the oxygen feedback environment learning and the oxygen feedback bypass valve learning. The oxygen feedback learning unit 88 performs each of the oxygen feedback environment learning and the oxygen feedback bypass valve learning once per driving cycle of the engine unit 11. In other words, each learning is performed once during the period from the startup to the stop of the engine unit 11.

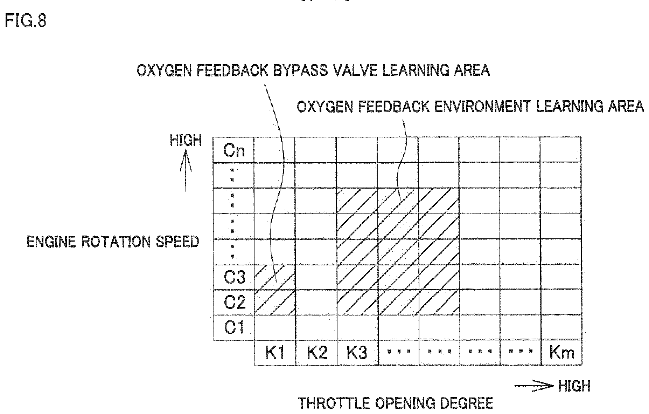

A map shown in FIG. 8 is used for the oxygen feedback learning. The map of FIG. 8 shows an oxygen feedback environment learning area associated with the values for the throttle opening degree and with the values for the engine rotation speed. The map of FIG. 8 also shows an oxygen feedback bypass valve learning area associated with the values for the throttle opening degree and with the values for the engine rotation speed. The oxygen feedback environment learning area and the oxygen feedback bypass valve learning area are shown as hatching. The oxygen feedback environment learning area and the oxygen feedback bypass valve learning area are included in the oxygen feedback control area shown in FIG. 7.

After the startup of the engine unit 11, the oxygen feedback learning unit 88 determines whether the point indicated by a signal from the engine rotation speed sensor 71 and a signal from the throttle position sensor 74 is within the oxygen feedback environment learning area. When the point indicated by the two signals is within the oxygen feedback environment learning area, the oxygen feedback learning unit 88 performs the oxygen feedback environment learning. To be more specific, the oxygen feedback learning unit 88 calculates the difference between: the final fuel supply amount obtained through the oxygen feedback control; and the basic fuel supply amount obtained with reference to the map shown in FIG. 5. This difference is stored in the ROM or RAM as an oxygen feedback environment learning value. The oxygen feedback learning unit 88 compares the obtained oxygen feedback environment learning value with one of the stored oxygen feedback environment learning values. The two compared values correspond to the same throttle opening degree and the same engine rotation speed. When there is a difference between the two compared values, it is concluded that there is a change in atmospheric pressure. Accordingly, when there is a difference between the two compared values, the oxygen feedback learning unit 88 calculates an oxygen feedback environment learning correction value. The oxygen feedback environment learning correction value is calculated based on the difference between the compared two oxygen feedback environment learning values. The oxygen feedback learning correcting unit 91 corrects the basic fuel supply amount based on the calculated oxygen feedback environment learning correction value.

After the startup of the engine unit 11, the oxygen feedback learning unit 88 determines whether the point indicated by the signal from the engine rotation speed sensor 71 and the signal from the throttle position sensor 74 is within the oxygen feedback bypass valve learning area. When the point indicated by the two signals is within the oxygen feedback bypass valve learning area, the oxygen feedback learning unit 88 performs the oxygen feedback bypass valve learning. To be more specific, the oxygen feedback learning unit 88 calculates the difference between: the final fuel supply amount obtained through the oxygen feedback control; and the basic fuel supply amount obtained with reference to the map shown in FIG. 5. This difference is stored in the ROM or RAM as an oxygen feedback bypass valve learning value. The oxygen feedback learning unit 88 compares the obtained oxygen feedback bypass valve learning value with one of the stored oxygen feedback bypass valve learning values. The two compared values correspond to the same throttle opening degree and the same engine rotation speed. When there is a difference between the two compared values, it is concluded that there is a change in the opening degree of the bypass valve 46. Accordingly, when there is a difference between the two compared values, the oxygen feedback learning unit 88 calculates an oxygen feedback bypass valve learning correction value. The oxygen feedback bypass valve learning correction value is calculated based on the difference between the compared two oxygen feedback bypass valve learning values. The oxygen feedback learning correcting unit 91 corrects the basic fuel supply amount based on the calculated oxygen feedback bypass valve learning correction value.

The ignition timing controlling unit 82 is configured to calculate the ignition timing. The ignition timing is the timing at which the spark plug 31 produces an electrical spark. The ignition timing is expressed in rotation angles of the crankshaft 26 taking the compression top dead center as a reference. The compression top dead center is the top dead center for the piston 28 shifting from the compression stroke to the combustion stroke. The minimum advance with which the best torque is achieved is called the minimum advance for the best torque (MBT). Hereinafter, an advance near the MBT may be expressed as "the ignition timing is close to the MBT". Furthermore, an advance in retard of the MBT may be expressed as "the ignition timing is in retard of the MBT", for example. The MBT is the best ignition timing to enhance the fuel economy and engine power. However, knocking is more likely to occur at the MBT. For this reason, the ignition timing is retarded relative to the MBT. Besides, the ignition timing is controlled to be brought as close to the MBT as possible while large knocking is prevented.

The ignition timing controlling unit 82 includes a basic ignition timing calculating unit 93 and a final ignition timing calculating unit 94. The basic ignition timing calculating unit 93 is configured to calculate basic ignition timing. The final ignition timing calculating unit 94 is configured to correct the value of the basic ignition timing obtained by the basic ignition timing calculating unit 93, to calculate final ignition timing.

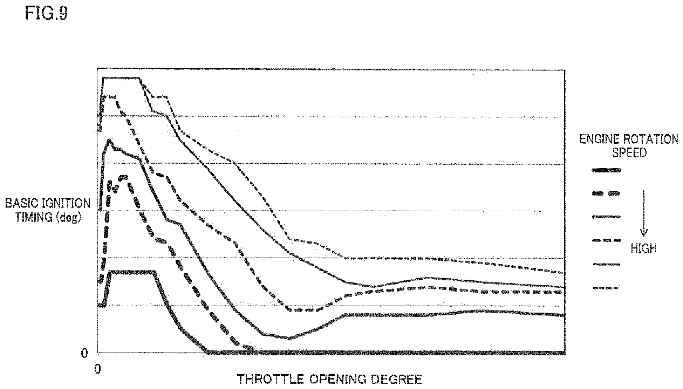

The basic ignition timing calculating unit 93 is configured to calculate the basic ignition timing based on the signal from the throttle position sensor 74 and based on the signal from the engine rotation speed sensor 71. The basic ignition timing calculating unit 93 is able to calculate the basic ignition timing throughout the entire opening-degree range for the opening degree of the throttle valve 45 and throughout the entire rotation-speed range for the engine rotation speed. The basic ignition timing calculating unit 93 is configured to calculate the basic ignition timing based on the above-mentioned two signals, wherever the signals are in the respective entire ranges mentioned above. To be more specific, the basic ignition timing calculating unit 93 obtains the basic ignition timing using a map (not illustrated) containing values for the basic ignition timing associated with the throttle opening degree and with the engine rotation speed. In this map, the values for the basic ignition timing are set for the entire opening-degree range for the throttle opening degree and for the entire rotation-speed range for the engine rotation speed. FIG. 9 is a graph illustrating an example of the relationship between the throttle opening degree, the engine rotation speed, and the basic ignition timing.

The final ignition timing calculating unit 94 includes a knocking sensor correction cancelling unit 95, a knocking sensor correcting unit 96, and an engine temperature sensor correcting unit 97. The knocking sensor correcting unit 96 is configured to correct the basic ignition timing based on a signal from the knocking sensor 72. The control of the ignition timing based on the signal from the knocking sensor 72 is called "knocking control". The knocking sensor correction cancelling unit 95 is configured to determine whether to cancel the correction by the knocking sensor correcting unit 96. That is, the knocking sensor correction cancelling unit 95 determines whether to perform the knocking control. The above determination is made based on the signal from the throttle position sensor 74 and based on the signal from the engine rotation speed sensor 71.

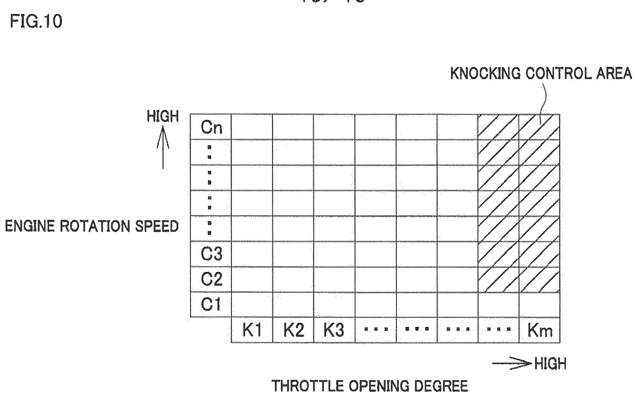

To be more specific, a map shown in FIG. 10 is used for the above determination. The map of FIG. 10 shows a knocking control area associated with the values for the throttle opening degree and with the values for the engine rotation speed. The knocking control area is shown as hatching. As shown in FIG. 10, the knocking control area corresponds to particularly large values for the throttle opening degree. That is, the engine load is high in the knocking control area.

The knocking sensor correction cancelling unit 95 determines whether a point indicated by the signal from the throttle position sensor 74 and the signal from the engine rotation speed sensor 71 is included in the knocking control area. When the point indicated by the two signals is not included in the knocking control area, the knocking sensor correction cancelling unit 95 determines to cancel the correction. Meanwhile, when the point indicated by the two signals is included in the knocking control area, the knocking sensor correction cancelling unit 95 determines not to cancel the correction.

When determining to cancel the correction, the knocking sensor correction cancelling unit 95 cancels the correction by the knocking sensor correcting unit 96. To cancel the correction by the knocking sensor correcting unit 96 is to, specifically, prevent the knocking sensor correcting unit 96 from performing arithmetic processing. Note that the cancellation of the correction by the knocking sensor correcting unit 96 may be performed in an alternative way. That is, the knocking sensor correcting unit 96 may perform arithmetic processing using a correction value which is not based on the signal from the knocking sensor 72 so that the result of the arithmetic processing is equal to the value before the correction.

When the knocking sensor correction cancelling unit 95 determines not to cancel the correction, the knocking sensor correcting unit 96 corrects the basic ignition timing. The knocking sensor correcting unit 96 is configured to correct the basic ignition timing based on a signal from the knocking sensor 72. To be more specific, the knocking sensor correcting unit 96 determines the presence or absence of knocking in the engine main body 20 based on the signal from the knocking sensor 72. The presence or absence of knocking is determined based on a peak value of the signal from the knocking sensor 72, for example. When it is determined that knocking is present, the knocking sensor correcting unit 96 corrects the basic ignition timing by retarding the ignition timing by a predetermined retard angle. Meanwhile, when it is determined that knocking is absent, the knocking sensor correcting unit 96 corrects the basic ignition timing by advancing the ignition timing by a predetermined advance angle. In this way, each time the correction is made under conditions where knocking is absent, the ignition timing is advanced by a predetermined advance angle towards the MBT. Meanwhile, each time the correction is made under conditions where knocking is present, the ignition timing is retarded, relative to the MBT, by a predetermined retard angle. As a consequence, occurrence of knocking is suppressed. Accordingly, while large knocking is prevented, the engine power and fuel economy are improved by bringing the ignition timing as close to the MBT as possible.

The result obtained by correcting the basic ignition timing by the knocking sensor correcting unit 96 is referred to as a "corrected ignition timing". The engine temperature sensor correcting unit 97 corrects the corrected ignition timing or the basic ignition timing, based on the signal from the engine temperature sensor 73. The final ignition timing calculating unit 94 adopts the value obtained through the correction by the engine temperature sensor correcting unit 97 as a final ignition timing. The actuation instructing unit 85 energizes the ignition coil 32 to actuate the spark plug 31, based on the final ignition timing calculated by the final ignition timing calculating unit 94.

The engine unit 11 of this embodiment does not include an intake pressure sensor. Because of this, a change in atmospheric pressure caused by a change in altitude, for example, is not directly reported to the ECU 80. However, knocking control is performed in the knocking control area, and this enables the ignition timing to be brought as close to the MBT as possible even when there is a change in atmospheric pressure. Thus, fuel economy and engine power are enhanced.

The engine unit 11 of the present embodiment has the following characteristics.

As the opening degree of the throttle valve 45 changes, the amount of air taken into the combustion chamber 30 changes. The path length D2 from the throttle valve 45 to the intake port 33 is shorter than the path length D1 from the atmosphere suction port 41 c to the throttle valve 45. That is, the throttle valve 45 is provided close to the combustion chamber 30. Due to this, there is less delay in the change of the amount of air taken into the combustion chamber 30, in relation to the change in the opening degree of the throttle valve 45.

The basic fuel supply amount calculating unit 86 is configured to calculate the basic fuel supply amount based on a signal from the throttle position sensor 74 and based on a signal from the engine rotation speed sensor 71. The basic fuel supply amount calculating unit 86 is able to calculate the basic fuel supply amount throughout the entire opening-degree range for the opening degree of the throttle valve 45 and throughout the entire rotation-speed range for the engine rotation speed. The basic ignition timing calculating unit 93 is configured to calculate the basic ignition timing based on the signal from the throttle position sensor 74 and based on the signal from the engine rotation speed sensor 71. The basic ignition timing calculating unit 93 is able to calculate the basic ignition timing throughout the entire opening-degree range for the opening degree of the throttle valve 45 and throughout the entire rotation-speed range for the engine rotation speed.

Thus, the basic fuel supply amount calculating unit 86 calculates the basic fuel supply amount based on the opening degree of the throttle valve 45. The basic ignition timing calculating unit 93 also calculates the basic ignition timing based on the opening degree of the throttle valve 45. Because of these, there is less delay in the change of the basic fuel supply amount and in the change of the basic ignition timing, in relation to the change in the opening degree of the throttle valve 45. As described above, there is less delay in the change of the amount of air taken into the combustion chamber 30, in relation to the change in the opening degree of the throttle valve 45. Due to this, when the opening degree of the throttle valve 45 changes, there is a small time lag between: the change of each of the basic fuel supply amount and the basic ignition timing in response to the change in the valve opening degree; and the change of the amount of air taken into the combustion chamber 30 in response to the change in the valve opening degree.

The final fuel supply amount calculating unit 87 is configured to calculate the final fuel supply amount from the basic fuel supply amount. The final fuel supply amount calculating unit 87 includes the oxygen sensor correcting unit 90 and the oxygen sensor correction cancelling unit 89. The oxygen sensor correcting unit 90 is configured to correct the basic fuel supply amount based on a signal from the oxygen sensor 75. The oxygen sensor correction cancelling unit 89 is configured to cancel the correction by the oxygen sensor correcting unit 90 based on the signal from the throttle position sensor 74 and based on the signal from the engine rotation speed sensor 71. The final ignition timing calculating unit 94 is configured to calculate the final ignition timing from the basic ignition timing. The final ignition timing calculating unit 94 includes the knocking sensor correcting unit 96 and the knocking sensor correction cancelling unit 95. The knocking sensor correcting unit 96 is configured to correct the basic ignition timing based on a signal from the knocking sensor 72. The knocking sensor correction cancelling unit 95 is configured to cancel the correction by the knocking sensor correcting unit 96 based on the signal from the throttle position sensor 74 and based on the signal from the engine rotation speed sensor 71. The actuation instructing unit 85 is configured to actuate the injector 42 based on the final fuel supply amount. The actuation instructing unit 85 is configured to actuate the spark plug 31 based on the final ignition timing.

Thus, the final fuel supply amount calculating unit 87 is configured to determine whether to cancel the correction to the basic fuel supply amount based on the opening degree of the throttle valve 45, and to determine the final fuel supply amount. Meanwhile, the final ignition timing calculating unit 94 is configured to determine whether to cancel the correction to the basic ignition timing based on the opening degree of the throttle valve 45, and to determine the final ignition timing. Because of these, there is less delay in correction to the basic fuel supply amount and in correction to the basic ignition timing, in relation to the change in the opening degree of the throttle valve 45. As described above, there is less delay in the change of the amount of air taken into the combustion chamber 30, in relation to the change in the opening degree of the throttle valve 45. Due to this, when the opening degree of the throttle valve 45 changes, there is a small time lag between: the change of a correction value for each of the basic fuel supply amount and the basic ignition timing in response to the change in the valve opening degree; and the change of the amount of air taken into the combustion chamber 30 in response to the change in the valve opening degree.

As described above, when the opening degree of the throttle valve 45 changes, there is a small time lag between: the change of each of the basic fuel supply amount and the basic ignition timing in response to the change in the valve opening degree; and the change of the amount of air taken into the combustion chamber 30 in response to the change in the valve opening degree. Furthermore, when the opening degree of the throttle valve 45 changes, there is a small time lag between: the change of the correction value for each of the basic fuel supply amount and the basic ignition timing in response to the change in the valve opening degree; and the change of the amount of air taken into the combustion chamber 30 in response to the change in the valve opening degree. This enables improvement in the precision of the control of the fuel supply amount and the ignition timing. As a result, improvement in the exhaust gas purification performance and improvement in engine power or fuel economy are achievable.

The fuel supply amount and the ignition timing are controlled based on readings by the throttle position sensor 74 and by the engine rotation speed sensor 71. In addition, the control of the fuel supply amount and the control of the ignition timing each covers the entire opening-degree range for the opening degree of the throttle valve 45 and the entire rotation-speed range for the engine rotation speed. As a result, the improvement in the exhaust gas purification performance and the improvement in engine power or fuel economy are achievable by simple control.

The engine unit 11 does not include an intake pressure sensor configured to detect internal pressure in the intake passage member 41. Furthermore, the engine unit 11 does not include an intake temperature sensor configured to detect the temperature in the intake passage member 41. Because of these, intake pressure and intake temperature are not used to control the fuel supply amount and the ignition timing. This makes the control of the fuel supply amount and the control of the ignition timing simpler.

A preferred embodiment of the present teaching has been described above. It should be noted that the present teaching is not limited to the above-described embodiment, and various changes can be made within the scope of the claims. Further, modifications described later may be used in combination as needed. It is noted that the term "preferable" used herein is non-exclusive and means "preferable but not limited to".

The final fuel supply amount calculating unit 87 may include one or more correcting units configured to correct the fuel supply amount other than the oxygen sensor correcting unit 90 and the engine temperature sensor correcting unit 92. For example, the final fuel supply amount calculating unit 87 may have a correcting unit configured to correct the fuel supply amount in accordance with transient characteristics at the time of acceleration/deceleration.

The final ignition timing calculating unit 94 may include one or more correcting units configured to correct the ignition timing other than the knocking sensor correcting unit 96 and the engine temperature sensor correcting unit 97. Alternatively, the final ignition timing calculating unit 94 does not have to include the engine temperature sensor correcting unit 97.

While the catalyst 53 is provided below the engine main body in the above-described embodiment, the location of the catalyst 53 is not limited as long as the catalyst 53 is in the exhaust passage member 51. The catalyst 53 may be provided in the muffler 54. Alternatively, the catalyst 53 may be provided in front of the engine main body 20. In addition to the above, a plurality of catalysts may be provided in the exhaust passage member 51.

While the injector 42 is arranged to inject fuel into the intake passage member 41 in the above-described embodiment, the injector 42 may be arranged to inject fuel into the combustion chamber 30. The injector 42 may be provided in the engine main body 20.

In the above-described embodiment, the injector 42 is equivalent to the fuel supplier in the present teaching. However, the fuel supplier in the present teaching is not limited to the injector. The fuel supplier in the present teaching may be another device as long as it is configured to supply fuel into the combustion chamber. For example, the fuel supplier in the present teaching may be a carburetor configured to supply fuel into the combustion chamber by depression.

The engine unit 11 may include an intake pressure sensor configured to detect internal pressure in the intake passage member 41. In this case, a signal from the intake pressure sensor may be used to control the fuel supply amount and/or the ignition timing.

The engine unit 11 may include an intake temperature sensor configured to detect the temperature of air in the intake passage member 41. In this case, a signal from the intake temperature sensor may be used to control the fuel supply amount and/or the ignition timing.

The engine unit 11 of the above-described embodiment is a natural air-cooled engine. In this regard, in the present teaching, the air-cooled engine unit may be a forced air-cooled engine unit. The forced air-cooled engine unit includes a shroud and a fan. The shroud is provided to cover at least a part of the engine main body. As the fan is driven, air is introduced into the inside of the shroud.

While the engine unit 11 of the above-described embodiment is the air-cooled engine unit, the engine unit of the present teaching may be a water-cooled engine unit.

While the engine unit 11 of the above-described embodiment is a single-cylinder engine unit, the engine unit of the present teaching may be a multi-cylinder engine unit including a plurality of combustion chambers. In this alternative, the number of atmosphere suction ports 41c may be smaller than the number of the combustion chambers 30. That is to say, a part of the intake passage member 41 for one of the combustion chambers 30 may function as a part of the intake passage member 41 for another one of the combustion chambers 30. The number of the atmosphere suction ports 41c may be one. Furthermore, the number of atmosphere discharge ports 64a may be smaller than the number of the combustion chambers 30. That is to say, a part of the exhaust passage member 51 for one of the combustion chambers 30 may function as a part of the exhaust passage member 51 for another one of the combustion chambers 30. The number of the atmosphere discharge ports 64a may be one. Furthermore, when the number of the combustion chambers 30 is an odd number larger than four, two atmosphere discharge ports 64a may be provided at the left and right, respectively.

The combustion chamber in the present teaching may include a main combustion chamber and an auxiliary combustion chamber communicating with the main combustion chamber. In this case, the main combustion chamber and the auxiliary combustion chamber constitute the single combustion chamber.

The above-described embodiment deals with an example in which the engine unit of the present teaching is used in a sports motorcycle. In this regard, objects to which the engine unit of the present teaching is applied are not limited to sports motorcycles. The engine unit of the present teaching may be applied to motorcycles other than sports motorcycles. For example, the engine unit of the present teaching is applicable to scooters, a kind of motorcycle. Moreover, the engine unit of the present teaching is applicable to leaning vehicles other than motorcycles. The leaning vehicles are vehicles each having a vehicle body frame which leans to the right of the vehicle when turning right, and leans to the left of the vehicle when turning left. Moreover, the engine unit of the present teaching is applicable to straddled vehicles other than motorcycles. The straddled vehicles encompass all the variety of vehicles that a rider rides as if the rider straddles a saddle. The straddled vehicles encompass motorcycles, tricycles, four-wheelers (all-terrain vehicles (ATVs)), personal water crafts, snowmobiles, and the like.

In this description, the path length of a freely-selected portion of the intake passage member 41 means the length of the path provided in the freely-selected portion. A similar definition is applied to the path length of a freely-selected portion of the exhaust passage member 51. In this description, the path length means the length of the center line of the path.

### Reference Signs List

11: engine unit
20: engine main body
30: combustion chamber
31: spark plug (ignition device)
32: ignition coil (ignition device)
33: intake port
34: exhaust port
41: intake passage member
41c: atmosphere suction port
42: injector (fuel supplier)
45: throttle valve (close-to-combustion-chamber throttle valve)
51: exhaust passage member
64a: atmosphere discharge port
71: engine rotation speed sensor
72: knocking sensor
73: engine temperature sensor
74: throttle position sensor (close-to-combustion-chamber throttle position sensor)
75: oxygen sensor
80: ECU (controller)
81: fuel supply amount controlling unit
82: ignition timing controlling unit
85: actuation instructing unit
86: basic fuel supply amount calculating unit
87: final fuel supply amount calculating unit
89: oxygen sensor correction cancelling unit
90: oxygen sensor correcting unit
93: basic ignition timing calculating unit
94: final ignition timing calculating unit
95: knocking sensor correction cancelling unit
96: knocking sensor correcting unit

## Claims

1. An engine unit comprising:
an engine main body forming at least one combustion chamber;
an intake passage member connecting an intake port provided through the combustion chamber with an atmosphere suction port through which air is taken in from the atmosphere, the air flowing inside the intake passage member from the atmosphere suction port to the intake port;
an exhaust passage member connecting an exhaust port provided through the combustion chamber with an atmosphere discharge port through which exhaust gas is discharged to the atmosphere, the exhaust gas flowing inside the exhaust passage member from the exhaust port to the atmosphere discharge port;
a fuel supplier configured to supply fuel into the combustion chamber;
an ignition device configured to ignite the fuel in the combustion chamber;
a close-to-combustion-chamber throttle valve provided in the intake passage member and positioned so that a path length of a first portion of the intake passage member is shorter than a path length of a second portion of the intake passage member, the first portion being from the close-to-combustion-chamber throttle valve to the intake port, the second portion being from the atmosphere suction port to the close-to-combustion-chamber throttle valve;
a close-to-combustion-chamber throttle position sensor configured to detect an opening degree of the close-to-combustion-chamber throttle valve;
a knocking sensor configured to detect knocking occurring in the engine main body;
an engine rotation speed sensor configured to detect engine rotation speed;
an oxygen sensor configured to detect oxygen concentration in the exhaust gas in the exhaust passage member; and
a controller configured to control a fuel supply amount of the fuel supplier and to control an ignition timing of the ignition device,
the controller including:
a basic fuel supply amount calculating unit configured to calculate a basic fuel supply amount based on a signal from the close-to-combustion-chamber throttle position sensor and based on a signal from the engine rotation speed sensor, wherever the signal from the close-to-combustion-chamber throttle position sensor is in an entire opening-degree range for the opening degree of the close-to-combustion-chamber throttle valve and wherever the signal from the engine rotation speed sensor is in an entire rotation-speed range for the engine rotation speed;
a basic ignition timing calculating unit configured to calculate a basic ignition timing based on the signal from the close-to-combustion-chamber throttle position sensor and based on the signal from the engine rotation speed sensor, wherever the signal from the close-to-combustion-chamber throttle position sensor is in the entire opening-degree range for the opening degree of the close-to-combustion-chamber throttle valve and wherever the signal from the engine rotation speed sensor is in the entire rotation-speed range for the engine rotation speed;
a final fuel supply amount calculating unit configured to calculate a final fuel supply amount from the basic fuel supply amount, the final fuel supply amount calculating unit including an oxygen sensor correcting unit configured to correct the basic fuel supply amount based on a signal from the oxygen sensor, and an oxygen sensor correction cancelling unit configured to cancel the correction by the oxygen sensor correcting unit based on the signal from the close-to-combustion-chamber throttle position sensor and based on the signal from the engine rotation speed sensor;
a final ignition timing calculating unit configured to calculate the final ignition timing from the basic ignition timing, the final ignition timing calculating unit including a knocking sensor correcting unit configured to correct the basic ignition timing based on a signal from the knocking sensor and a knocking sensor correction cancelling unit configured to cancel the correction by the knocking sensor correcting unit based on the signal from the close-to-combustion-chamber throttle position sensor and based on the signal from the engine rotation speed sensor; and
an actuation instructing unit configured to actuate the fuel supplier based on the final fuel supply amount and configured to actuate the ignition device based on the final ignition timing.

2. The engine unit according to claim 1, wherein
the engine unit does not include: an intake pressure sensor provided for the intake passage member and configured to detect internal pressure in the intake passage member; and an intake temperature sensor provided for the intake passage member and configured to detect temperature in the intake passage member.

## Patentansprüche

1. Eine Motoreinheit, die folgende Merkmale aufweist:
einen Motorhauptkörper, der zumindest eine Verbrennungskammer bildet;
ein Einlassdurchgangsbauglied, das einen Einlassanschluss, der durch die Verbrennungskammer hindurch bereitgestellt ist, mit einem Atmosphärenansauganschluss verbindet, durch den Luft aus der Atmosphäre hereingenommen wird, wobei die Luft in dem Einlassdurchgangsbauglied von dem Atmosphärenansauganschluss zu dem Einlassanschluss strömt;
ein Auslassdurchgangsbauglied, das einen Auslassanschluss, der durch die Verbrennungskammer hindurch bereitgestellt ist, mit einem Atmosphärenabgabeanschluss verbindet, durch den ein Auslassgas an die Atmosphäre abgegeben wird, wobei das Auslassgas in dem Auslassdurchgangsbauglied von dem Auslassanschluss zu dem Atmosphärenabgabeanschluss strömt;
eine Kraftstoffzufuhreinrichtung, die dazu ausgebildet ist, Kraftstoff in die Verbrennungskammer zuzuführen;
eine Zündvorrichtung, die dazu ausgebildet ist, den Kraftstoff in der Verbrennungskammer zu entzünden;
ein in der Nähe der Verbrennungskammer angeordnetes Drosselventil, das in dem Einlassdurchgangsbauglied bereitgestellt ist und so positioniert ist, dass eine Weglänge eines ersten Abschnittes des Einlassdurchgangsbaugliedes kürzer ist als eine Weglänge eines zweiten Abschnittes des Einlassdurchgangsbaugliedes, wobei der erste Abschnitt von dem in der Nähe der Verbrennungskammer angeordneten Drosselventil zu dem Einlassanschluss führt, wobei der zweite Abschnitt von dem Atmosphärenansauganschluss zu dem in der Nähe der Verbrennungskammer angeordneten Drosselventil führt;
ein in der Nähe der Verbrennungskammer angeordneter Drosselstellungssensor, der dazu ausgebildet ist, einen Öffnungsgrad des in der Nähe der Verbrennungskammer angeordneten Drosselventils zu detektieren,
einen Klopfsensor, der dazu ausgebildet ist, ein Klopfen zu detektieren, das in dem Motorhauptkörper auftritt;
einen Motordrehzahlsensor, der dazu ausgebildet ist, eine Motordrehzahl zu detektieren;
einen Sauerstoffsensor, der dazu ausgebildet ist, eine Sauerstoffkonzentration in dem Auslassgas in dem Auslassdurchgangsbauglied zu detektieren; und
eine Steuerung, die dazu ausgebildet ist, eine Kraftstoffzufuhrmenge der Kraftstoffzufuhreinrichtung zu steuern und eine Zündeinstellung der Zündvorrichtung zu steuern,
wobei die Steuerung folgende Merkmale aufweist:
eine Grundkraftstoffzufuhrmengenberechnungseinheit, die dazu ausgebildet ist, eine Grundkraftstoffzufuhrmenge auf der Basis eines Signals von dem in der Nähe der Verbrennungskammer angeordneten Drosselstellungssensor und auf der Basis eines Signals von dem Motordrehzahlsensor zu berechnen, wo sich das Signal von dem in der Nähe der Verbrennungskammer angeordneten Drosselstellungssensor in einem gesamten Öffnungsgradbereich für den Öffnungsgrad des in der Nähe der Verbrennungskammer angeordneten Drosselventils befindet und wo sich das Signal von dem Motordrehzahlsensor in einem gesamten Drehzahlbereich für die Motordrehzahl befindet;
eine Grundzündeinstellungsberechnungseinheit, die dazu ausgebildet ist, eine Grundzündeinstellung auf der Basis des Signals von dem in der Nähe der Verbrennungskammer angeordneten Drosselstellungssensors und auf der Basis des Signals von dem Motordrehzahlsensor zu berechnen, wo sich das Signal von dem in der Nähe der Verbrennungskammer angeordneten Drosselstellungssensor in dem gesamten Öffnungsgradbereich für den Öffnungsgrad des in der Nähe der Verbrennungskammer angeordneten Drosselventils befindet und wo sich das Signal von dem Motordrehzahlsensor in dem gesamten Drehzahlbereich für die Motordrehzahl befindet;
eine Endkraftstoffzufuhrmengenberechnungseinheit, die dazu ausgebildet ist, eine Endkraftstoffzufuhrmenge aus der Grundkraftstoffzufuhrmenge zu berechnen, wobei die Endkraftstoffzufuhrmengenberechnungseinheit eine Sauerstoffsensorkorrektureinheit, die dazu ausgebildet ist, die Grundkraftstoffzufuhrmenge auf der Basis eines Signals von dem Sauerstoffsensor zu korrigieren, und eine Sauerstoffsensorkorrekturabbrucheinheit umfasst, die dazu ausgebildet ist, die Korrektur durch die Sauerstoffsensorkorrektureinheit auf der Basis des Signals von dem in der Nähe der Verbrennungskammer angeordneten Drosselstellungssensor und auf der Basis des Signals von dem Motordrehzahlsensor abzubrechen;
eine Endzündeinstellungsberechnungseinheit, die dazu ausgebildet ist, die Endzündeinstellung aus der Grundzündeinstellung zu berechnen, wobei die Endzündeinstellungsberechnungseinheit eine Klopfsensorkorrektureinheit, die dazu ausgebildet ist, die Grundzündeinstellung auf der Basis eines Signals von dem Klopfsensor zu korrigieren, und eine Klopfsensorkorrekturabbrucheinheit umfasst, die dazu ausgebildet ist, die Korrektur durch die Klopfsensorkorrektureinheit auf der Basis des Signals von dem in der Nähe der Verbrennungskammer angeordneten Drosselstellungssensor und auf der Basis des Signals von dem Motordrehzahlsensor abzubrechen; und
eine Betätigungsanweisungseinheit, die dazu ausgebildet ist, die Kraftstoffzufuhreinrichtung auf der Basis der Endkraftstoffzufuhrmenge zu betätigen, und die dazu ausgebildet ist, die Zündvorrichtung auf der Basis der Endzündeinstellung zu betätigen.

2. Die Motoreinheit gemäß Anspruch 1, bei der
die Motoreinheit Folgendes nicht umfasst: einen Einlassdrucksensor, der für das Einlassdurchgangsbauglied bereitgestellt ist und dazu ausgebildet ist, einen Innendruck in dem Einlassdurchgangsbauglied zu detektieren; und einen Einlasstemperatursensor, der für das Einlassdurchgangsbauglied bereitgestellt ist und dazu ausgebildet ist, einen Temperatur in dem Einlassdurchgangsbauglied zu detektieren.

## Revendications

1. Unité de moteur, comprenant:
un corps principal de moteur formant au moins une chambre de combustion;
un élément de passage d'admission connectant un orifice d'admission prévu à travers la chambre de combustion à un orifice d'aspiration d'atmosphère à travers lequel de l'air est aspiré de l'atmosphère, l'air circulant à l'intérieur de l'élément de passage d'admission de l'orifice d'aspiration d'atmosphère vers l'orifice d'admission;
un élément de passage d'échappement connectant un orifice d'échappement prévu à travers la chambre de combustion à un orifice d'évacuation d'atmosphère à travers lequel le gaz d'échappement est évacué vers l'atmosphère, le gaz d'échappement circulant à l'intérieur de l'élément de passage d'échappement de l'orifice d'échappement vers l'orifice d'évacuation d'atmosphère;
un alimentateur de carburant configuré pour alimenter du carburant vers la chambre de combustion;
un dispositif d'allumage configuré pour allumer le carburant dans la chambre de combustion;
une soupape d'étranglement proche de la chambre de combustion prévue dans l'élément de passage d'admission et positionnée de sorte qu'une longueur de trajet d'une première partie de l'élément de passage d'admission soit plus courte qu'une longueur de trajet d'une deuxième partie de l'élément de passage d'admission, la première partie allant de la soupape d'étranglement proche de la chambre de combustion à l'orifice d'admission, la deuxième partie allant de l'orifice d'aspiration d'atmosphère au clapet d'étranglement proche de la chambre de combustion;
un capteur de position de soupape d'étranglement proche de la chambre de combustion configuré pour détecter un degré d'ouverture de la soupape d'étranglement proche de la chambre de combustion;
un capteur de cliquetis configuré pour détecter un cliquetis se produisant dans le corps principal du moteur;
un capteur de vitesse de rotation de moteur configuré pour détecter la vitesse de rotation du moteur;
un capteur d'oxygène configuré pour détecter la concentration d'oxygène dans le gaz d'échappement dans l'élément de passage d'échappement; et
un régulateur configuré pour réguler une quantité d'alimentation de carburant de l'alimentateur de carburant et pour réguler un moment d'allumage du dispositif d'allumage,
le régulateur comprenant:
une unité de calcul de quantité d'alimentation de carburant de base configurée pour calculer une quantité d'alimentation de carburant de base sur base d'un signal du capteur de position de soupape d'étranglement proche de la chambre de combustion et sur base d'un signal du capteur de vitesse de rotation du moteur, où le signal du capteur de position de soupape d'étranglement proche de la chambre de combustion est émis pour une plage de degrés d'ouverture complète pour le degré d'ouverture de la soupape d'étranglement proche de la chambre de combustion et où le signal du capteur de vitesse de rotation du moteur est émis pour une plage de vitesses de rotation complète pour la vitesse de rotation du moteur;
une unité de calcul de moment d'allumage de base configurée pour calculer un moment d'allumage de base sur base du signal du capteur de position de soupape d'étranglement proche de la chambre de combustion et sur base du signal du capteur de vitesse de rotation du moteur, où le signal du capteur de position de la soupape d'étranglement proche de la chambre de combustion est émis pour la plage de degrés d'ouverture complète pour le degré d'ouverture de la soupape d'étranglement proche de la chambre de combustion et où le signal du capteur de vitesse de rotation du moteur est émis pour la plage de vitesses de rotation complète pour la vitesse de rotation du moteur;
une unité de calcul de quantité d'alimentation de carburant finale configurée pour calculer une quantité d'alimentation de carburant finale à partir de la quantité d'alimentation de carburant de base, l'unité de calcul de quantité d'alimentation de carburant finale comportant une unité de correction de capteur d'oxygène configurée pour corriger la quantité d'alimentation de carburant de base sur base d'un signal du capteur d'oxygène, et une unité d'annulation de correction de capteur d'oxygène configurée pour annuler la correction par l'unité de correction de capteur d'oxygène sur base du signal du capteur de position de soupape d'étranglement proche de la chambre de combustion et sur base du signal du capteur de vitesse de rotation de moteur;
une unité de calcul de moment d'allumage final configurée pour calculer le moment d'allumage finale à partir du moment d'allumage de base, l'unité de calcul de moment d'allumage final comportant une unité de correction de capteur de cliquetis configurée pour corriger le moment d'allumage de base sur base d'un signal du capteur de cliquetis et une unité d'annulation de correction de capteur de cliquetis configurée pour annuler la correction par l'unité de correction de capteur de cliquetis sur base du signal du capteur de position de soupape d'étranglement proche de la chambre combustion et sur base du signal du capteur de vitesse de rotation de moteur; et
une unité d'instruction d'actionnement configurée pour actionner l'alimentateur de carburant sur base de la quantité d'alimentation de carburant finale et configurée pour actionner le dispositif d'allumage sur base du moment d'allumage final.

2. Unité de moteur selon la revendication 1, dans laquelle
l'unité de moteur ne comporte pas: un capteur de pression d'admission prévu pour l'élément de passage d'admission et configuré pour détecter une pression interne dans l'élément de passage d'admission; et un capteur de température d'admission prévu pour l'élément de passage d'admission et configuré pour détecter la température dans l'élément de passage d'admission.
